# EUROPEAN PATENT SPECIFICATION

(11) **EP 3 550 650 B1**
(45) Date of publication and mention of the grant of the patent: **17.11.2021**
(21) Application number: 18739431.7
(22) Date of filing: 09.01.2018
(51) Int. Cl.: H01M 8/0226, H01M 8/0213, H01M 8/0221, H01M 8/10

(54) **METHOD FOR PRODUCING SEPARATOR FOR FUEL CELLS**
VERFAHREN ZUR HERSTELLUNG VON SEPARATOR FÜR BRENNSTOFFZELLEN
PROCÉDÉ DE FABRICATION DE SÉPARATEUR POUR PILES À COMBUSTIBLE

(30) Priority: 13.01.2017 JP 2017003870
(43) Date of publication of application: 09.10.2019
(73) Proprietor: Shin-Etsu Polymer Co., Ltd., Chiyoda-ku Tokyo 101-0041 (JP)
(72) Inventor: ANDO, Hitoshi, Saitama-shi Saitama 331-0811 (JP); SUZUKI, Tsutomu, Saitama-shi Saitama 331-0811 (JP); YONEYAMA, Masaru, Saitama-shi Saitama 331-0811 (JP); OKADA, Akira, Saitama-shi Saitama 331-0811 (JP); KOIZUMI, Akihiro, Saitama-shi Saitama 331-0811 (JP)
(74) Representative: Schäfer, Matthias W.
(86) International application number: PCT/JP2018/000195
(87) International publication number: WO 2018/131566

(56) References cited:
- EP-A2- 1 246 284
- JP-A- 2002 093 431
- JP-A- 2006 092 784
- JP-A- 2006 332 035
- JP-A- 2009 093 965
- JP-A- 2010 153 311

## Description

### Technical Field

The present invention relates to a method for producing a separator for fuel cells.

### Background Art

A fuel cell is a cell from which energy is taken by utilizing reaction between hydrogen and oxygen. Since what is generated by the reaction is water, the fuel cell is known as an environmentally friendly cell. In particular, since a solid polymer fuel cell achieves high output density and is small and lightweight, the cell is considered to be prominent as a battery for a car, communication equipment, electronic equipment and the like, and some such cells have been put to practical use.

The fuel cell is a cell stack configured by stacking a plurality of cells. A wall member referred to as a separator is interposed between the cells. The separator is a partition wall plate that separates a hydrogen passage and an oxygen passage that are adjacent to each other, and plays a role so that hydrogen and oxygen uniformly come in contact with and flow along all over an ion exchange membrane. Consequently, a groove is formed as a flow path in the separator. The separator is required to be small in electric resistance, because it is necessary to send a generated current to the adjacent cell. The separator is also required to be usable at a temperature of 100 to 200°C under a highly humid environment with a humidity of 90 to nearly 100% for a time as long as about 10 years, and is therefore required to have a highly mechanical strength. As a separator that meets these requirements, an exemplary separator is known in which graphite particles are dispersed in a thermoplastic resin (see Patent Literature 1). This type of separator can be obtained and formed in a desired shape, for example, by kneading the thermoplastic resin and the graphite particles to obtain a kneaded material, forming the kneaded material into pellets, again kneading the pellets with a screw of an injection molding machine, and injecting the kneaded pellets into a mold.

Further fuel cell separators are described in Patent Literatures 2 to 4. Patent Literature 2 discloses a fuel cell separator containing conductive material and epoxy resin. In the fuel cell, the epoxy resin is made of solid epoxy resin whose epoxy equivalent weight is 300-500. Further, according to another fuel cell separator, raw materials containing not lower than 60 weight% of conductive material and 34-40 weight% of resin material are kneaded, and adjusted to have a flow index of 5-20%. A kneaded compound is compression-molded so that a fuel cell separator is obtained. Patent Literature 3 discloses a separator for fuel cell that is molded of a forming material containing a conductive granule and a thermoplastic resin. The surface of the separator is rich in conductive granule, and the content of the conductive granule changes in a manner of continuously or gradually slanting from the surface toward inside. Patent Literature 4 discloses a fuel cell separator formed by press-molding a preliminary molded body formed in a planar shape by using a molding die, wherein the preliminary molded body is formed by having a prepreg made by integrating a paper-making sheet obtained with a paper-making method by using raw material made of the expanded graphite with a fibrous filling material added, and a sheet-shaped body of thermoplastic resin such as polypropylene by piling them up with thermocompression.

### Citation List

### Patent Literature

Patent Literature 1: Japanese Patent Laid-Open No. 2006-294407
Patent Literature 2: EP 1 246 284 A2
Patent Literature 3: JP 2006 332035 A
Patent Literature 4: JP 2009 093965 A

### Summary of Invention

### Technical Problem

The conventionally known separator for fuel cells described above can exert appropriate characteristics, but the separator is further required to have higher electrical conductivity in a market. Dispersion of graphite particles in a resin only achieves insufficient connection among the graphite particles, and there is a limit to further improvement of the electrical conductivity of the separator. A thin and lightweight resin formed body to be achieved is required to have high flexibility and high bending strength. A separator surface requires hydrophilicity to immediately discharge generated water generated during reaction between hydrogen and oxygen or water vapor through a flow path.

The present invention has been developed to meet the above requirements, and an object thereof is to provide a method for producing a separator for fuel cells which is excellent in electrical conductivity, flexibility and bending strength, while having a separator surface that has excellent hydrophilicity.

### Solution to Problem

To achieve the above described object, there is provided a method for producing a separator for fuel cells, which comprises 15 to 40 parts by mass of a fibrous resin and 85 to 60 parts by mass of a conductive material having higher electrical conductivity than the resin and having forms of particles and fibers, wherein the conductive material mainly comprises graphite particles and carbon fibers, and a mass ratio of the graphite particles is larger than a mass ratio of the carbon fibers, the method comprising a composite sheet preparation step of preparing a composite sheet in which a part of the conductive material is dispersed in the fibrous resin, a formed body preparation step of forming the conductive material excluding the part to prepare a conductive material formed body, and a heating and compression step of stacking, heating and compressing the conductive material formed body and the composite sheet, wherein the formed body preparation step comprises an arrangement step of arranging the composite sheet in a decompressible decompression container, a mounting step of mounting the conductive material in the forms of the particles or fibers on the composite sheet, and a decompression step of closing the decompression container to decompress an interior of the decompression container.

### Advantageous Effects of Invention

According to the present invention, there can be produced a separator for fuel cells which is excellent in electrical conductivity, flexibility and bending strength, while having a separator surface that has excellent hydrophilicity.

### Brief Description of Drawings

[Figure 1] Figure 1 shows a plan view (1A) of a separator for fuel cells according to an embodiment described herein, and a cross-sectional view taken along an A-A line in the plan view and an enlarged schematic view (1B) of a region B in the cross-sectional view.
[Figure 2] Figure 2 shows a flow of a production process of the separator for fuel cells of Figure 1.
[Figure 3] Figure 3 shows a former half of the flow of Figure 2 in cross-sectional views.
[Figure 4] Figure 4 shows a latter half of the flow of Figure 2 in cross-sectional views, following Figure 3.

### Reference Signs List

1 separator (the separator for fuel cells)
5 resin
6 conductive material (carbon particles and carbon fibers)
7 conductive material (graphite particles)
10 suction jig (one example of a decompression container)
11 composite sheet
25 conductive material formed body

### Description of Embodiments

Next, respective embodiments will be described with reference to the drawings. Note that the respective embodiments described below do not restrict the invention according to claims, and various elements described in the respective embodiments and all combinations thereof are not necessarily essential for solutions of the present invention.

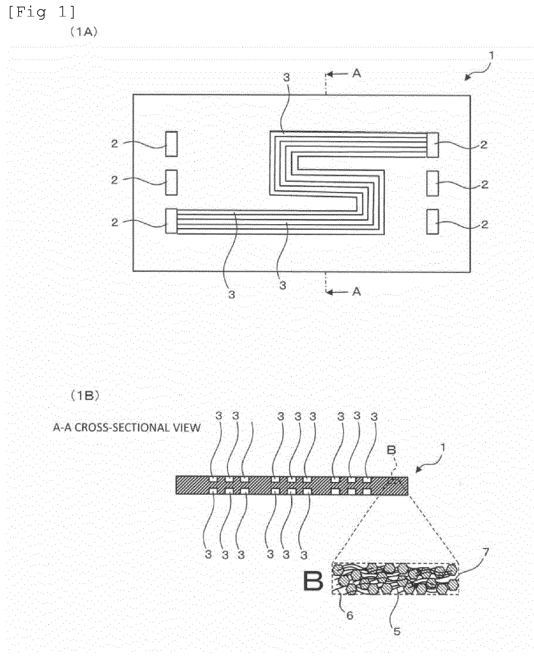

Figure 1 shows a plan view (1A) of a separator for fuel cells according to an embodiment described herein, and a cross-sectional view taken along an A-A line in the plan view and an enlarged schematic view (1B) of a region B in the cross-sectional view.

In a separator 1 for the fuel cells (hereinafter referred to simply as "the separator") according to one embodiment described herein, as shown in (1A), flow paths 3 through which a gas or a liquid flows are formed in a front surface and a back surface of the separator 1. A cross-sectional shape of the flow paths 3 is suitably a U-shape or a lateral U-shape, but is not limited thereto. The separator 1 also comprises one or more through holes 2. The through holes 2 are for use, for example, in connection to constitutional members of the fuel cells.

As shown in (1B), the separator 1 comprises a composite material containing a resin 5, and conductive materials 6 and 7 having higher electrical conductivities than the resin 5 and having forms of particles and fibers. The resin 5 preferably comprises a fibrous resin as a starting material. In this embodiment, the conductive material 6 comprises carbon fibers. The conductive material 7 also comprises graphite particles. The graphite particles may comprise either one of expanded graphite, artificial graphite or natural graphite, and the expanded graphite is preferable from a viewpoint of resistance value. Here, the expanded graphite refers to graphite or a graphite interlayer compound obtained by expanding graphite interlayers by entrance (intercalation) of another material layer into a specific plane of a structure in which regular hexagon planes of graphite are superimposed. There are not any special restrictions on a shape of the graphite particles, and a scale, a sphere or another shape can be appropriately selected.

Hereinafter, in place of the conductive material 6, the carbon fibers 6 may be referred, and in place of the conductive material 7, the graphite particles 7 may be referred. Note that the conductive material does not necessarily include two types, i.e., the carbon fibers 6 and the graphite particles 7, and the conductive material may include only the carbon fibers 6 or only the graphite particles 7. Alternatively, the conductive material may include another type of one or more conductive materials in addition to these materials 6 and 7. However, the conductive materials 6 and 7 preferably include at least a particulate material. In the present application, "carbon" includes its subordinate concept "graphite".

The most suitable combination of the conductive materials 6 and 7 is a combination of fibrous graphite and graphite particles. The conductive material is not limited to a carbon-based material, and may comprise metal particles or metal fibers having excellent electrical conductivity. A particulate conductive material represented by the graphite particles 7 comprise particles having an average particle diameter (by laser diffraction/scattering particle size distribution measurement method) preferably from 5 to 80 µm and more preferably from 10 to 50 µm. When graphite is employed as the conductive materials 6 and 7, an electric resistance of graphite is from 1 to 3 × 10⁻³Ω·cm, and the electric resistance is lower than an electric resistance of the resin 5 (conversely, the electrical conductivity is higher). Note that when a metal is used in the conductive materials 6 and 7, the electric resistance can be theoretically lowered below the electric resistance of graphite. However, an oxide film of a surface exhibits insulation properties, and hence the electric resistance during formation may heighten.

The resin 5 may be either of a thermoplastic resin or thermosetting resin. An example of a resin more suitable for application to the separator 1 is a resin having excellent heat resistance. Specific examples of the resin comprise polyphenylene sulfide (PPS), polyamide (PA), polyether ketone ether ketone ketone (PEKEKK), polyether ether ketone (PEEK), polyether ketone (PEK), liquid crystal polymer (LCP), polytetrafluoroethylene (PTFE), tetrafluoroethylene-ethylene copolymer (ETFE), polychlorotrifluoroethylene (PCTFE), polyimide (PI), polyamide imide (PAI), polyether sulfone (PES), polyphenyl sulfone (PPSU), polyether imide (PEI) and polysulfone (PSU). Among these examples, PPS is especially suitable.

The fibrous resin 5 suitably for use as the starting material of the resin 5 has an average length preferably from 1 to 40 mm and more preferably from 2 to 20 mm. For example, BSP-60A (an average particle diameter of 60 µm) or EXP-50SM manufactured by Fuji Kokuen Kogyo Kabushiki Kaisha is used as the expanded graphite. For example, No. 5S manufactured by Oriental Industry Co. LTD. can be used as the artificial graphite, and CNG-75N (an average particle diameter of 43 µm) manufactured by Fuji Kokuen Kogyo Kabushiki Kaisha or CPB (scaly graphite powder with an average particle diameter of 19 µm) manufactured by Nippon Kokuen Group can be used as the natural graphite. A type of carbon fibers 6 is not limited, and polyacrylonitrile (PAN) based carbon fibers, petroleum or coal based, i.e., pitch-based carbon fibers, phenolic carbon fibers, rayon carbon fibers or other carbon fibers can be used. A fiber diameter of the carbon fibers is in a range, for example, from 0.5 to 50 µm, preferably from 1 to 30 µm and further preferably from 5 to 20 µm. A length of the carbon fibers 6 is not limited either, but is in a range, for example, from 10 µm to 5 mm and preferably from 20 µm to 6 mm. To improve compatibility with a matrix resin, for example, the surfaces of the carbon fibers 6 are treated by using a surface treatment agent such as a silane coupling agent, or a surface treatment agent can be added in an appropriate step. As fibers from which similar effects can be expected, various single-layer or multilayer carbon nanotubes can be used, and the nanotubes having appropriate fiber diameter, length and surface treatment can be used. These carbon fibers and carbon nanotubes may be mixed and used.

Furthermore, aramid fibers only having an aromatic skeleton are preferable as reinforcement of the fibrous resin. In the aramid fibers, each of para-aramid and meta aramid may be singly used, or these aramids may be mixed at an optional composition ratio. A shape of the aramid fibers may be a cut fiber shape, a pulp shape or another shape. By use of the aramid fibers, when PPS fibers melt and function as a binder during heating formation, the aramid fibers maintain dispersed states of the particulate and fibrous conductive materials. The aramid fibers have high equilibrium water absorption to the PPS fibers, and hence a separator surface obtains hydrophilicity. When water or water vapor is generated by reaction between hydrogen and oxygen, water is effectively discharged along the separator surface. The aramid fibers are also effective to impart heat resistance, strength, chemical resistance and other properties to base resin fibers (e.g., PPS). As the aramid fibers, Kevlar (registered trademark) manufactured by DU PONT-TORAY CO., LTD. of Kevlar cut fibers having a length of 3 mm can be used. When "pulp-like" fibers having fluffy fiber surfaces are partially used in the resin fibers, the resin fibers can be preferably "intertwined" with one another during paper making.

A suitable mass ratio between the fibrous resin 5 and the conductive materials 6 and 7 is 15 to 40:85 to 60. For example, 15 parts by mass of the resin 5 can be mixed with the conductive materials 6 and 7 in a range of 60 parts by mass or more and 85 parts by mass or less to obtain a constituting material of the separator 1. Alternatively, for example, 40 parts by mass of the resin 5 can be similarly mixed with the conductive materials 6 and 7 in a range of 60 parts by mass or more and 85 parts by mass or less to obtain the constituting material of the separator 1. Thus, the separator 1 preferably comprises the conductive materials 6 and 7 at the mass ratio larger than the mass ratio of the resin 5. Consequently, the inventive separator has more contact regions between the conductive materials 6 and 7 than a conventional separator, and the electric resistance of the separator 1 can further decrease (i.e., the electrical conductivity can further increase). The separator also comprises the conductive material 6 having higher tensile strength than the conductive material 7, so that there can be obtained the separator 1 that is thinner and is more excellent in flexibility and bending strength than the conventional separator.

When the fibrous and particulate materials are used as the conductive materials, the fibrous material is easily oriented along a plane direction, and accordingly easily contributes to improvement of the electrical conductivity of the separator 1 in the plane direction. On the other hand, the particulate material is used regardless of the plane direction and a thickness direction, and therefore tends to contribute to improvement of the electrical conductivity of the separator 1 in the thickness direction which is insufficiently achieved by the fibrous material. In particular, when the particulate conductive material is tentatively formed to form a three-dimensional network as described later, it is possible to decrease the resistance in the thickness direction which cannot be decreased only by the fibrous conductive material. As a result, the electrical conductivity of the separator 1 in both the plane direction and the thickness direction can improve.

The separator 1 according to the present embodiment is preferably configured to fill gaps in the three-dimension network of the graphite particles 7 with the fibrous resin 5 and the carbon fibers 6. Consequently, the excellent electrical conductivity of the separator 1 in the thickness direction is secured by a network structure of the graphite particles 7. On the other hand, the excellent electrical conductivity of the separator 1 in the plane direction is secured not only by the network of the graphite particles 7 but also by orientation of the carbon fibers 6 mainly in the plane direction. In a typical sample of the separator 1 according to the present embodiment, a volume resistance is 20 mΩ·cm (m ohm·cm) or less.

Furthermore, the conductive material mainly comprises the graphite particles 7, and carbon particles other than the graphite particles 7 (one example of the conductive material 6 and a substitute for the above carbon fibers 6), and the graphite particles 7 are preferably comprised at the mass ratio larger than the mass ratio of the above carbon particles. In this case, it is preferable that 30 to 5 parts by mass of carbon particles are mixed and comprised to 40 to 80 parts by mass of the graphite particles 7. For example, the carbon particles in a range of 5 parts by mass or more and 30 parts by mass or less can be mixed with 40 parts by mass of the graphite particles 7 to constitute the conductive material. Alternatively, the carbon particles in the range of 5 parts by mass or more and 30 parts by mass or less can be similarly mixed with 80 parts by mass of the graphite particles 7 to constitute the conductive material.

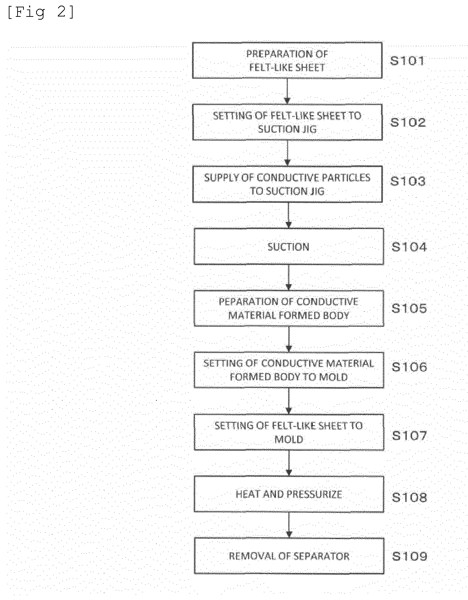

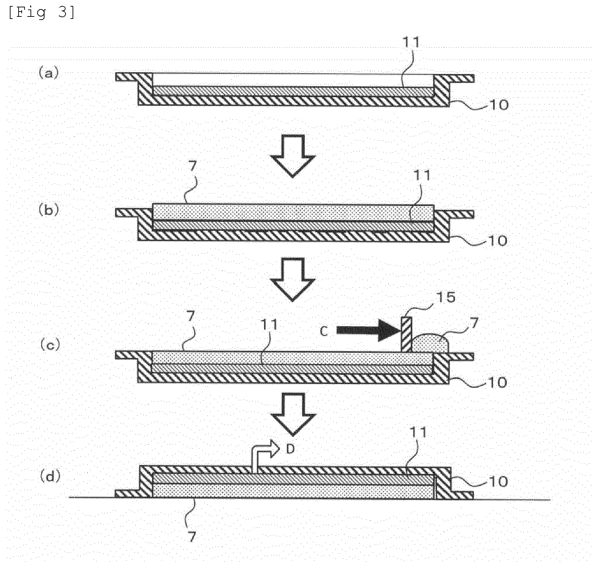

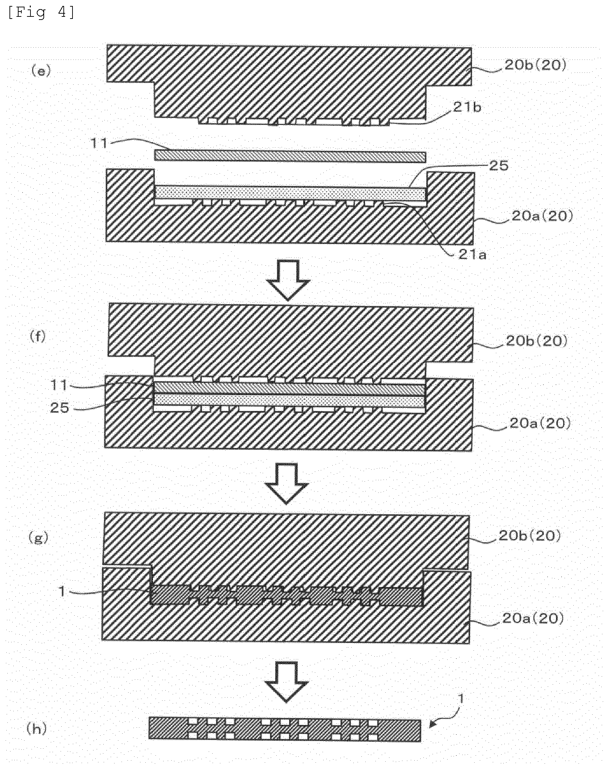

Figure 2 shows a flow of a production process of the separator for fuel cells of Figure 1. Figure 3 shows a former half of the flow of Figure 2 in cross-sectional views. Figure 4 shows a latter half of the flow of Figure 2 in cross-sectional views, following Figure 3.

A method for producing a separator for fuel cells according to the present embodiment is a method for producing a separator 1 comprising 15 to 40 parts by mass of the fibrous resin 5 and 85 to 60 parts by mass of the conductive materials 6 and 7. As described above, the conductive materials 6 and 7 are materials having higher electrical conductivities than the resin 5 and having forms of particles and fibers. As shown in Figure 3 and Figure 4, the method for producing the separator 1 comprises a composite sheet preparation step of preparing a composite sheet 11 in which a part (here, the carbon fibers) 6 of the conductive material is dispersed in the fibrous resin 5, a formed body preparation step of forming the conductive material excluding the part of the carbon fibers 6 and including the particulate graphite particles 7 to prepare a conductive material formed body 25, and a heating and compression step of stacking, heating and compressing the conductive material formed body 25 and the composite sheet 11. In the producing method, the formed body preparation step preferably comprises an arrangement step of arranging the composite sheet 11 in a suction jig 10 as an example of a decompressible decompression container, a mounting step of mounting the graphite particles 7 on the composite sheet 11, and a decompression step of closing the suction jig 10 to decompress an interior of the suction jig 10. Hereinafter, the method for producing the separator 1 will be described in detail with reference to Figure 2 to Figure 4.

### (1) Preparation of Felt-like Sheet (S101)

Step S101 corresponds to the composite sheet preparation step of preparing the composite sheet 11 in which the carbon fibers 6 are dispersed in the fibrous resin 5. In this step, at least the fibrous resin 5 and the carbon fibers 6 are first mixed and dispersed in water, to prepare a slurry having a solid content of 0.5 to 10 wt% (a slurry preparation step). Subsequently, flocculants are added to the slurry (a flocculants adding step). Subsequently, the obtained slurry is formed into a sheet (a sheet formation step). The sheet formation step is performed in a procedure similar to a paper making procedure. Next, the sheet (also referred to as the paper making sheet) is pressurized and dried (a drying step). In this step, there is almost no water. Next, the dried paper making sheet is heated and pressurized in a mold to form a felt-like sheet (a felt-like sheet forming step). By these series of steps, the composite sheet 11 is completed in which the carbon fibers 6 are substantially uniformly dispersed in the fibrous resin 5.

On the other hand, when the carbon particles (suitably the graphite particles) 6 are used as the conductive material in place of the carbon fibers 6 described above, the step S101 is the following step. First, at least the fibrous resin 5 and the particulate carbon particles 6 are mixed and dispersed in water, to prepare the slurry having the solid content of 0.5 to 10 wt% (the slurry preparation step). Subsequently, with the same process procedure as described above, the flocculants adding step, the sheet formation step, the drying step and the felt-like sheet forming step are performed in order. By these series of steps, the composite sheet 11 is completed in which the carbon particles 6 are substantially uniformly dispersed in the fibrous resin 5. Note that the use of the carbon fibers 6 is not restrictive, and also when the carbon particles 6 are used, the flocculants adding step may be omitted.

### (2) Setting of Felt-like Sheet to Suction Jig (S102)

Step S102 corresponds to the arrangement step of arranging the composite sheet 11 in the suction jig 10. As shown in Figure 3(a), the composite sheet 11 prepared in the step S101 is arranged on an inner bottom surface of the suction jig 10.

### (3) Supply of Conductive Particles to Suction Jig (S103)

Step S103 corresponds to a mounting step of mounting particulate (note that the material may be fibrous) conductive material (the graphite particles 7 herein) on the composite sheet 11 in the suction jig 10. As shown in Figure 3(b), the graphite particles 7 are preferably mounted to completely fill in a space on the composite sheet 11 in the suction jig 10. Afterward, as shown in Figure 3(c), a scraper 15 or another tool is preferably moved in a direction of arrow C, thereby removing the graphite particles 7 overflowing above in the suction jig 10, so that an upper surface of an opening of the suction jig 10 is almost flat. When the separator 1 having a thickness of 1 mm is produced, a thickness of the composite sheet 11 is preferably from 2 to 7 mm and more preferably from 3 to 5 mm. An amount of the graphite particles 7 arranged on the composite sheet 11 is a present amount preferably from 0.5 to 1.8 g and more preferably from 0.8 to 1.2 g per unit area of the composite sheet 11.

### (4) Suction (S104)

Step S104 corresponds to the decompression step of closing the suction jig 10 to decompress the interior of the suction jig 10. As shown in Figure 3(d), it is preferable to suction the interior from a bottom portion of the suction jig 10 as shown by arrow D in a state where the suction jig 10 is turned upside down and the composite sheet 11 is turned downside up.

### (5) Preparation of Conductive Material Formed Body (S105)

Step S105 is a step of suctioning (also referred to as decompressing) the graphite particles 7 in the suction jig 10 to compress and primarily form the particles, and corresponds to the formed body preparation step of forming the graphite particles 7 to prepare the conductive material formed body 25. After the suction, the conductive material formed body 25 is removed together with the composite sheet 11 from the suction jig 10, so that the conductive material formed body 25 can be obtained.

### (6) Setting of Conductive Material Formed Body to Mold (S106)

Step S106 is a step of arranging the conductive material formed body 25 in a forming mold (hereinafter referred to simply as "the mold") 20 of the separator 1. The mold 20 is preferably a structure comprising a lower mold 20a and an upper mold 20b to pressurize a compression target in the lower mold 20a with the upper mold 20b. However, the structure of the mold 20 is not limited to the above structure.

### (7) Setting of Felt-like Sheet to Mold (S107)

Step S107 is a step of arranging the composite sheet 11 in the mold 20. As shown in Figure 4(e), in this step, the composite sheet 11 is arranged on the conductive material formed body 25 set in the lower mold 20a, and the upper mold 20b is arranged on the sheet. The lower mold 20a comprises irregularities 21a in an inner bottom surface of the lower mold. The conductive material formed body 25 is set in the lower mold 20a so that one surface of the body comes in contact with the irregularities 21a. The composite sheet 11 is stacked on an upper surface of the conductive material formed body 25, and the upper mold 20b is further mounted on the sheet.

### (8) Heat and Pressurize (S108)

Step S108 corresponds to the heating and compression step of stacking, heating and compressing the conductive material formed body 25 and the composite sheet 11. In this step, as shown in Figure 4(f) and (g), the heating is performed while tightening the lower mold 20a and the upper mold 20b. A pressure during the formation by use of the mold 20 is preferably from about 400 to 900 kg/cm² (about 40 to 90 MPa), more preferably from 50 to 70 MPa, and further preferably from 55 to 65 MPa. A temperature during the formation fluctuates in accordance with a type of resin 5 or a pressure. For example, when PPS is used, the heating temperature during the formation is preferably from 280 to 350°C and more preferably from 300 to 330°C. By the formation under the heating and pressurizing, the fibrous resin 5 and the carbon fibers 6 (or the carbon particles 6) that constitute the composite sheet 11 flow into gaps of a three-dimensional network of the graphite particles 7 constituting the conductive material formed body 25, to fill in the gaps. Afterward, the fibrous resin 5 heats and melts, and forms a binder resin to fix the carbon fibers 6 and the graphite particles 7, and any shapes of the fibrous resin 5 are not left.

### (9) Removal of Separator (S109)

Step S109 is a step of opening the mold 20 to remove the formed separator 1. With this step, the separator 1 having a configuration shown in Figure 1 is completed as shown in Figure 4(h).

Note that when the conductive material constituting the composite sheet 11 and the conductive material constituting the conductive material formed body 25 are both particles, that is, when the carbon particles 6 other than the graphite particles and the graphite particles 7 are used, it is preferable that the average particle diameter of the graphite particles 7 is larger than the average particle diameter of the carbon particles 6. For example, when the average particle diameter of the carbon particles 6 is less than 10 µm, the average particle diameter of the graphite particles 7 is preferably 10 µm or more and 150 µm or less, more preferably 30 µm or more and 100 µm or less, and further referably 50 µm or more and 75 µm or less. The average particle diameter mentioned herein is obtained by the laser diffraction/scattering particle size distribution measurement method. This also applies hereinafter.

The preferred embodiments of the present invention have been described above, but the present invention is not limited to these embodiments and can be variously modified and implemented.

For example, the graphite particles 7 are preferably comprised at the mass ratio larger than the mass ratio of the carbon particles 6, but conversely, the mass ratio of the carbon particles 6 can be larger than the mass ratio of the graphite particles 7. When the conductive material comprises the graphite particles 7 and the carbon fibers 6, the graphite particles 7 are comprised at the mass ratio larger than the mass ratio of the carbon fibers 6. The conductive material preferably comprises 40 to 80 parts by mass of the graphite particles 7 and 30 to 5 parts by mass of the carbon particles 6 (or the carbon fibers 6), but the mass ratios can be other than the above mass ratios. The composite sheet 11 is not limited to a method of preparing the paper making sheet, and may be prepared by another process.

### Examples

Next, examples of the present invention will be described in comparison with comparative examples. However, the present invention is not limited to the following respective examples.

### (Example 1)

As a fibrous resin, there was used a composition comprising 30 parts by mass of short fibers obtained by cutting PPS finer TORCON (registered trademark) (manufactured by Toray Industries, Inc.) to a length of 3 mm, 10 parts by mass of cut fibers T008-003 (a fiber diameter of 7 µm and a cut length of 3 mm) of carbon fibers Torayca (registered trademark) (manufactured by Toray Industries, Inc.), and 50 parts by mass of expanded graphite XP-50SM (manufactured by Fuji Kokuen Kogyo Kabushiki Kaisha) as carbon particles (graphite particles). The composition was mixed and dispersed in water, to prepare a slurry having a solid content of 3%. Subsequently, 0.001 parts by mass cationic polyacrylic acid soda and 0.00001 parts by mass of anionic polyacrylic acid soda were added as flocculants to the slurry. The slurry was formed into a 20 cm square paper making sheet having a mesh structure by use of a sheet machine. The sheet was inserted in a press heated at 180°C, and heated and pressurized at a pressure of about 200 kg/cm2 for about 5 minutes, followed by drying. A composite sheet having a thickness of about 2 mm was obtained in which carbon fibers and expanded graphite were uniformly dispersed in fibrous PPS resin.

Next, this composite sheet was cut to be received by a suction jig having the same vertical and horizontal dimensions as in a separator to be formed, and arranged on an inner bottom surface in the suction jig. On this composite sheet, 10 parts by mass of expanded graphite XP-50SM (manufactured by Fuji Kokuen Kogyo Kabushiki Kaisha) was mounted to completely fill in a space on the composite sheet, and the graphite particles overflowing above in the suction jig were leveled by using a scraper to flatten an upper surface. In this state, an interior was suctioned (decompressed) from a bottom portion side of the suction jig to compress the expanded graphite filled in an upper portion of the composite sheet, so that a conductive material formed body was obtained.

Subsequently, an inner surface of a forming mold (hereinafter referred to simply as "the mold") of a separator 1 was uniformly coated with a release agent (tradename DAIFREE-GA7500 manufactured by DAIKIN INDUSTRIES, Ltd.). In the mold beforehand heated at 340°C, the above conductive material formed body and the composite sheet were arranged. As shown in Figure 4, the mold was a structure comprising a lower mold 20a and an upper mold 20b to pressurize a compression target in the lower mold 20a with the upper mold 20b. The lower mold 20a comprised irregularities 21a in an inner bottom surface thereof, and the upper mold 20b comprised irregularities 21b in a lower surface thereof. However, the structure of the mold 20 is not limited to the above structure.

Next, the mold 20 was tightened at a pressure (a gauge pressure) of 30 MPa, and pressurized and heated for about 5 minutes. Afterward, the pressure was released, and the mold was immediately transferred to a compression forming machine for cooling in which upper and lower heat plates had a temperature of 30°C. The mold was pressurized and cooled until the temperature of the mold reached 80°C or less, and then the separator for fuel cells, having a thickness of 0.8 mm, was removed from the mold. Here, PPS fibers heat and melt to form a binder resin that fix the carbon fibers and the graphite particles, and any shape of the fibers is not left.

The obtained separator for fuel cells was evaluated for electrical conductivity. There were evaluated and measured a volume resistance in a plane direction, a flexibility, presence/absence of generation of cracks during bending of both ends of the separator for fuel cells in a longitudinal direction which was a standard of strength, a use temperature range as a heat resistance, and a contact angle of water as a standard of hydrophilicity. Table 1 shows the results.

The volume resistance of the separator in the plane direction was measured by a four-terminal four-probe method, and an average value of measurement values of 10 separators measured in this manner was obtained. As a measuring machine, a low resistivity meter (product name Loresta GP MCP-T610 manufactured by Mitsubishi Chemical Corporation) was used. For the use temperature range as the heat resistance, the separator for fuel cells was left to stand at each temperature for 1,000 hours, and a temperature at which any cracks were not generated when both ends of the separator in the longitudinal direction were bent was obtained as the use temperature range. For the contact angle of water, a contact angle meter (product name DMo-501 manufactured by Kyowa Interface Science, Inc.) was used to measure the contact angle of water. Table 1 shows the results. The separator obtained on conditions of Example 1 was excellent in volume resistance, bending strength, flexibility and heat resistance, and had excellent flexibility at high temperatures during use.

### (Example 2)

The procedure of Example 1 was similarly repeated except that 25 parts by mass of PPS resin fibers and 5 parts by mass of Kevlar cut fiber having a length of 3 mm (tradename manufactured by DU PONT-TORAY CO., LTD.) of aramid fibers Kevlar (registered trademark) were comprised in Example 1, to perform evaluation. Table 1 shows the results. As a result of the evaluation, a use temperature was raised up to 200°C, a water contact angle decreased to 65°, and hydrophilicity improved.

### (Example 3)

The procedure of Example 1 was similarly repeated except that 35 parts by mass of PPS resin fibers, 10 parts by mass of carbon fibers and 55 parts by mass of expanded graphite were comprised in Example 1, to perform evaluation. Table 1 shows the results.

### (Example 4)

The procedure of Example 1 was similarly repeated except that 20 parts by mass of PPS resin fibers, 10 parts by mass of carbon fibers and 70 parts by mass of expanded graphite were comprised in Example 1, to perform evaluation. Table 1 shows the results.

### (Example 5)

In Example 1, 25 parts by mass of PPS resin fibers were comprised, and 5 parts by mass of PPS resin powder was used. PPS resin of TORELINA 2180 (tradename manufactured by Toray Industries, Inc.) was selected, and this PPS resin was crushed by a freeze crushing method. An average particle diameter of the obtained PPS resin was 70 µm. Then, 5 parts by mass of this PPS resin and 10 parts by mass of expanded graphite XP-50SM (manufactured by Fuji Kokuen Kogyo Kabushiki Kaisha) were thrown into Henschel mixer, and this Henschel mixer was rotated at 22°C for one minute to mix the PPS resin and the expanded graphite and obtain a mixed powder material for a conductive material formed body. The other procedure of Example 1 was similarly repeated, to perform evaluation. Table 1 shows the results.

### (Comparative Example 1)

The procedure of Example 1 was similarly repeated except that 10 parts by mass of PPS resin fibers, 10 parts by mass of carbon fibers and 80 parts by mass of expanded graphite were comprised in Example 1, to perform evaluation. Table 1 shows the results. As a result of the evaluation, less PPS resin components were comprised, so that bending strength was low and flexibility was insufficient.

### (Comparative Example 2)

The procedure of Example 1 was similarly repeated except that 45 parts by mass of PPS resin fibers, 10 parts by mass of carbon fibers and 45 parts by mass of expanded graphite were comprised in Example 1, to perform evaluation. Table 1 shows the results. As a result of the evaluation, more PPS resin components were comprised, less conductive material was comprised, and hence electrically conductive resistance value was high.

### (Comparative Example 3)

The procedure of Example 1 was similarly repeated except that 35 parts by mass of PPS resin fibers, 35 parts by mass of carbon fibers and 30 parts by mass of expanded graphite were comprised in Example 1, to perform evaluation. Table 1 shows the results. As a result of evaluation, more carbon fibers were comprised than expanded graphite, so that a volume resistance was high, bending strength was high and flexibility was insufficient.

**[Table 1]**

| | **R/resin fiber** | | **R1/resin powder** | **G1** | **G2** | **Volume resistance** | **Bending strength** | **Flexibility/ strength** | **Heat resistance Use temp.** | **Water contact angle** |
|---|---|---|---|---|---|---|---|---|---|---|
| | **PPS** | **Aramid** | **PPS** | **Carbon fiber** | **Graphite** | **mΩ·cm** | **MPa** | **Cracks generated** | **°C** | **degree** |
| **Example 1** | **30** | **0** | **0** | **10** | **60** | **5.2** | **110** | **None** | **180** | **81** |
| **Example 2** | **25** | **5** | **0** | **10** | **60** | **4.8** | **121** | **None** | **200** | **65** |
| **Example 3** | **35** | **0** | **0** | **10** | **55** | **7.1** | **97** | **None** | **180** | **83** |
| **Example 4** | **20** | **0** | **0** | **10** | **70** | **1.2** | **102** | **None** | **180** | **82** |
| **Example 5** | **25** | **0** | **5** | **10** | **60** | **4.7** | **108** | **None** | **180** | **88** |
| **Comparative Example 1** | **10** | **0** | **0** | **10** | **80** | **1.0** | **61** | **Present** | **180** | **80** |
| **Comparative Example 2** | **45** | **0** | **0** | **10** | **45** | **47.3** | **87** | **None** | **180** | **82** |
| **Comparative Example 3** | **35** | **0** | **0** | **35** | **30** | **63.2** | **370** | **None** | **180** | **84** |

### Industrial Applicability

A separator for fuel cells according to an embodiment described herein can be utilized for fuel cells.

## Claims

1. A method for producing a separator for fuel cells, which comprises 15 to 40 parts by mass of a fibrous resin and 85 to 60 parts by mass of a conductive material having higher electrical conductivity than the resin and having forms of particles and fibers, wherein the conductive material mainly comprises graphite particles and carbon fibers, and a mass ratio of the graphite particles is larger than a mass ratio of the carbon fibers, the method comprising:
a composite sheet preparation step of preparing a composite sheet in which a part of the conductive material is dispersed in the fibrous resin,
a formed body preparation step of forming the conductive material excluding the part to prepare a conductive material formed body, and
a heating and compression step of stacking, heating and compressing the conductive material formed body and the composite sheet,
wherein the formed body preparation step comprises:
an arrangement step of arranging the composite sheet in a decompressible decompression container,
a mounting step of mounting the conductive material in the forms of the particles or fibers on the composite sheet, and
a decompression step of closing the decompression container to decompress an interior of the decompression container.

## Patentansprüche

1. Verfahren zur Herstellung eines Separators für Brennstoffzellen, der 15 bis 40 Masseteile eines faserigen Harzes und 85 bis 60 Masseteile eines leitfähigen Materials mit höherer elektrischer Leitfähigkeit als das Harz und mit Formen von Teilchen und Fasern umfasst, wobei das leitfähige Material hauptsächlich Graphitteilchen und Kohlenstofffasern umfasst und ein Massenverhältnis der Graphitteilchen größer ist als ein Massenverhältnis der Kohlenstofffasern, wobei das Verfahren umfasst:
einen Schritt zur Herstellung einer Verbundfolie, bei dem ein Teil des leitfähigen Materials in dem faserigen Harz dispergiert ist,
einen Schritt zur Herstellung eines Formkörpers, bei dem das leitfähige Material mit Ausnahme des Teils geformt wird, um einen Formkörper aus leitfähigem Material herzustellen, und
einen Erhitzungs- und Verdichtungsschritt des Stapelns, Erhitzens und Verdichtens des aus leitfähigem Material geformten Körpers und der Verbundfolie,
wobei der Schritt der Herstellung des Formkörpers umfasst:
einen Anordnungsschritt des Anordnens der Verbundfolie in einem dekomprimierbaren Dekompressionsbehälter,
einen Anbringungsschritt des Anbringens des leitfähigen Materials in Form von Partikeln oder Fasern auf der Verbundfolie, und
einen Dekompressionsschritt des Schließens des Dekompressionsbehälters, um einen Innenraum des Dekompressionsbehälters zu dekomprimieren.

## Revendications

1. Procédé de production d'un séparateur pour piles à combustible, qui comprend 15 à 40 parties en masse d'une résine fibreuse et 85 à 60 parties en masse d'un matériau conducteur ayant une conductivité électrique supérieure à celle de la résine et ayant des formes de particules et de fibres, le matériau conducteur comprenant principalement des particules de graphite et des fibres de carbone, et un rapport de masse des particules de graphite étant supérieur à un rapport de masse des fibres de carbone, le procédé comprenant :
une étape de préparation de feuille composite consistant à préparer une feuille composite dans laquelle une partie du matériau conducteur est dispersée dans la résine fibreuse,
une étape de préparation de corps formé consistant à former le matériau conducteur excluant la partie afin de préparer un corps formé de matériau conducteur, et
une étape de chauffage et de compression consistant à empiler, chauffer et comprimer le corps formé en matériau conducteur et la feuille composite, l'étape de préparation du corps formé comprenant :
- une étape d'agencement consistant à agencer la feuille composite dans un récipient de décompression décompressible,
- une étape de dépôt consistant à déposer le matériau conducteur sous forme de particules ou de fibres sur la feuille composite, et
- une étape de décompression consistant à fermer le récipient de décompression pour décompresser l'intérieur du récipient de décompression.
